(19) Europäisches Patentamt
European Patent Office
Office européen des brevets

(11) **EP 1 746 711 A2**

(12) **DEMANDE DE BREVET EUROPEEN**

(43) Date de publication:
**24.01.2007 Bulletin 2007/04**

(51) Int Cl.:
***H02M 3/156*** *(2006.01)*

(21) Numéro de dépôt: **06117610.3**

(22) Date de dépôt: **20.07.2006**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **22.07.2005 FR 0507871**

(71) Demandeur: **ATMEL NANTES SA**
**44306 Nantes Cédex 3 (FR)**

(72) Inventeur: **Messager, Philippe**
**44470 Mauves-sur-Loire (FR)**

(74) Mandataire: **Guéné, Patrick Lucien Juan Joseph**
**Cabinet Vidon**
**Technopole Atalante**
**16B, rue de Jouanet**
**BP 90333**
**F-35703 Rennes Cedex 7 (FR)**

(54) **Convertisseur continu-continu**

(57) L'invention concerne un dispositif de conversion d'une tension d'alimentation continue en une tension de sortie continue, qui comprend :
- au moins une self accumulant une énergie au cours d'un temps d'accumulation et restituant ladite énergie accumulée au cours d'un temps de décharge, de façon à ce que ladite tension de sortie soit de valeur supérieure ou égale à celle de ladite tension d'alimentation ;

- un oscillateur pilotant lesdits temps d'accumulation et de décharge, dont une période est égale à une somme dudit temps d'accumulation et dudit temps de décharge et dont un rapport cyclique est égal au rapport dudit temps d'accumulation et de ladite période,

Selon l'invention, ledit oscillateur comprend des moyens de contrôle de ladite période et dudit rapport cyclique en fonction de ladite tension d'alimentation et de ladite tension de sortie.

Fig. 3

EP 1 746 711 A2

Printed by Jouve, 75001 PARIS (FR)

## Description

### 1. Domaine de l'invention

Le domaine de l'invention est celui de la conversion de tension, et plus particulièrement de la conversion d'une tension continue en une autre tension continue (encore appelée conversion DCDC).

Plus précisément, l'invention concerne un convertisseur DCDC selfique (c'est-à-dire fonctionnant à partir d'une self), permettant de générer une tension continue à partir d'une tension d'alimentation plus faible.

### 2. Solutions de l'art antérieur et leurs inconvénients

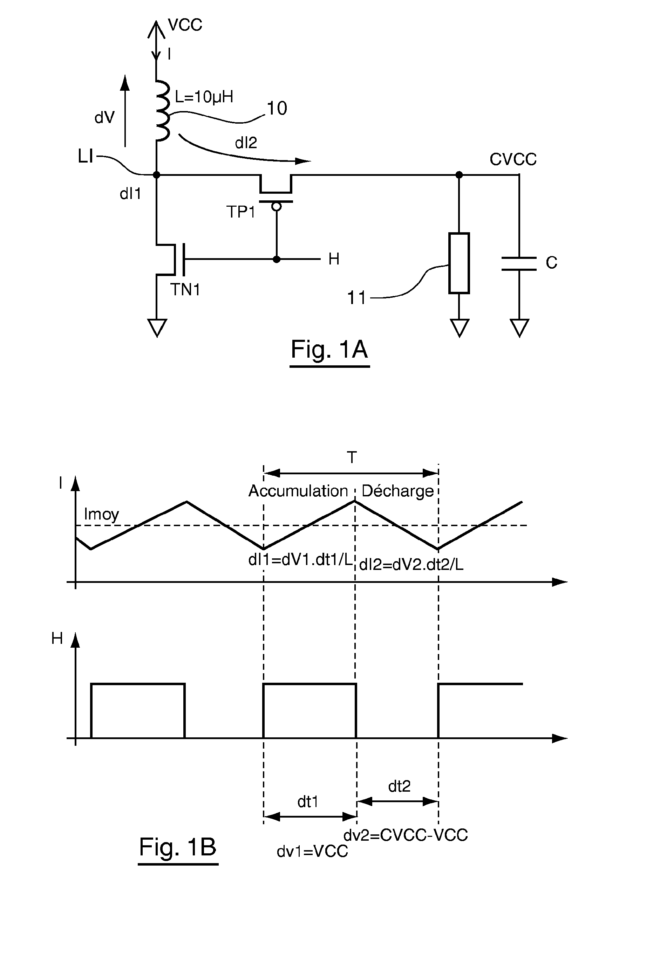

Le principe de fonctionnement de tels convertisseurs DCDC selfiques est illustré par les figures 1A et 1B. De tels convertisseurs comprennent classiquement :

- une self 10, qui présente ici une inductance L=10 μH ;
- deux transistors TN1 et TP1, commandés par un signal d'horloge H ;
- une charge 11 ;
- une capacité de filtrage C.

Le convertisseur est alimenté par une tension d'alimentation continue VCC, et délivre en sortie une tension de sortie continue CVCC. Son fonctionnement est régi par deux phases successives, à savoir :

#### - Phase 1 : Accumulation d'énergie

Au cours de cette première phase, le transistor TN1 permet d'accumuler de l'énergie dans la self 10 en augmentant le courant qui la traverse selon la loi dV1=L.dI1/dt1, où dV1 désigne la différence de potentiel aux bornes de la self 10 durant cette première phase. Lorsque le signal de commande H=1, le premier transistor TN1 est passant (c'est-à-dire ON) et le deuxième transistor TP1 est bloqué (c'est-à-dire off). La tension au noeud désigné par LI sur la figure 1A est alors nulle (LI=0), donc dV1=VCC (où VCC est la tension d'alimentation, encore appelée tension de batterie), dt1 étant le temps d'accumulation de l'énergie dans la self 10.

#### - Phase 2 : Décharge d'énergie

Lors d'une deuxième phase de fonctionnement, le signal de commande prend la valeur H=0, le transistor TN1 devient bloqué (c'est-à-dire off), et le transistor TP1 devient passant (c'est-à-dire ON). La self 10 décharge alors son énergie dans la charge 11, en élevant la tension au noeud LI pour éviter la rupture du courant qui la traverse. On a alors : dV2=L.dI2/dt2, où dV2 désigne la différence de potentiel aux bornes de la self 10 lors de cette deuxième phase de décharge, dt2 désignant le temps de décharge de la self. Ceci permet d'obtenir une tension de sortie CVCC supérieure à la tension d'alimentation VCC.

La figure 1B illustre, sur la courbe supérieure, l'évolution du courant I dans la self 10, en fonction de la valeur du signal H de commande des transistors TN1 et TP1. Le courant I augmente ainsi lors de la phase d'accumulation d'énergie dans la self, pendant laquelle H=1, et décroît lors de la phase de décharge d'énergie, pendant laquelle H=0, autour d'une valeur de courant moyenne Imoy.

La somme des temps d'accumulation dt1 et de décharge dt2 forme une période T d'oscillation du convertisseur : T=dt1+dt2. Au cours de l'accumulation, pendant dt1, on a dV1=VCC et pendant la décharge qui dure dt2, on a dV2=CVCC-VCC.

On définit en outre le rapport cyclique d'une telle oscillation de la façon suivante : $R = \dfrac{dt1}{T}$.

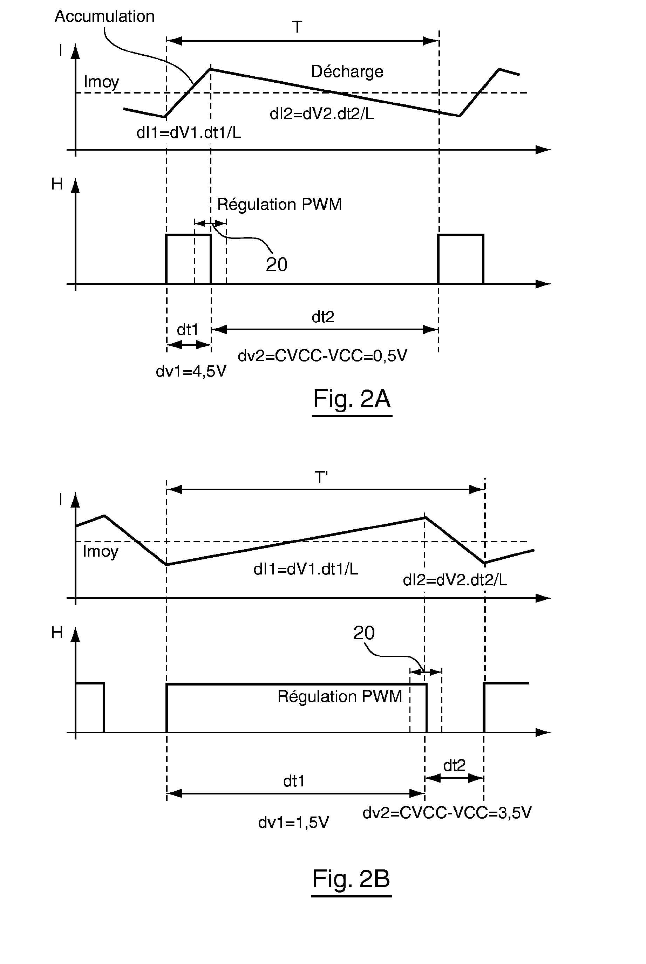

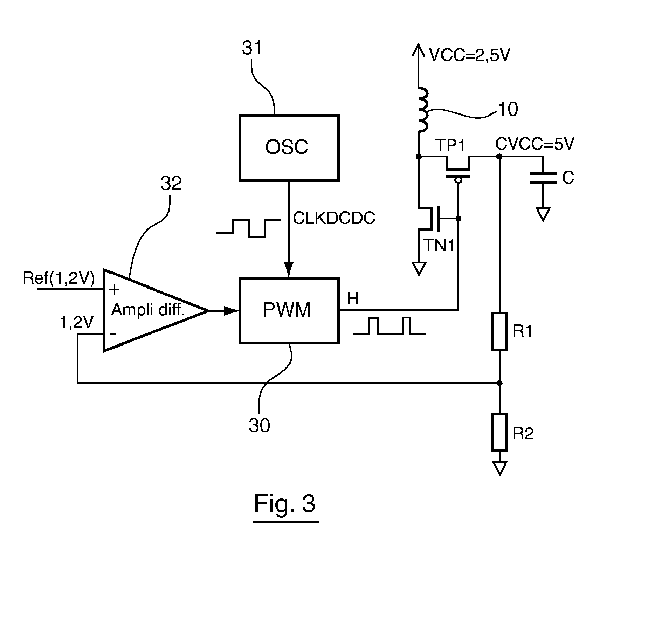

Les figures 2A et 2B illustrent plus particulièrement les phases d'accumulation et de décharge pour une tension de sortie CVCC=5V, d'une part quand la tension d'alimentation est élevée (VCC=4,5V), et d'autre part quand la tension d'alimentation est basse (VCC=1,5V). La figure 3 présente quant à elle un schéma complété du convertisseur DCDC de la figure 1A, présentant les moyens de génération du signal d'horloge H et de régulation du fonctionnement global du convertisseur.

Dans cet exemple de réalisation, la charge 11 du convertisseur n'a pas été représentée, par souci de simplification. Deux résistances R1 et R2, dont les valeurs sont choisies de façon à ce que :

$$1,2V = 5V * \dfrac{R2}{(R2 + R1)},$$ forment un pont diviseur,.

Le signal d'horloge H commandant l'état passant ou bloqué des transistors TN1 et TP1 est généré par un élément référencé 30, appelé PWM (pour "Pulse Width Modulation") réalisant la modulation du rapport cyclique du convertisseur. Ce PWM 30 reçoit, sur une première entrée, un signal CLKDCDC issu d'un oscillateur OSC 31, et, sur une deuxième entrée, le signal délivré en sortie de l'amplificateur différentiel 32.

Un tel amplificateur différentiel est alimenté, d'une part, par une tension de référence à 1,2V, appelée ref(1,2V), et d'autre part par la tension du noeud situé entre les deux résistances R1 et R2.

Lorsque la tension de sortie CVCC est supérieure à 5V (valeur qui constitue l'objectif à atteindre en sortie), la valeur du signal délivré en sortie de l'amplificateur différentiel 32, et fourni en entrée du PWM 30, diminue, de façon à ce que le PWM 30 fasse diminuer le rapport cyclique du signal H par rapport au signal CLKDCDC, en jouant sur le temps d'accumulation dt1 dans la self 10. A l'inverse, lorsque CVCC<5V, la valeur du signal délivré par l'amplificateur différentiel 32 augmente pour que le PWM fasse augmenter le rapport cyclique.

A l'équilibre, l'amplificateur différentiel délivre une tension non nulle (appelée tension d'équilibre) pour réguler le PWM 30.

On décrit tout d'abord succinctement les figures 2A et 2B, avant de détailler le fonctionnement du PWM 30. Chacune de ces figures présente une courbe supérieure illustrant l'évolution du courant I dans la self 10, en fonction du temps, et une courbe inférieure illustrant le signal de commande H délivré par le PWM 30. Comme illustré par la flèche 20, le PWM 30 peut agir sur les temps d'accumulation dt1 et de décharge dt2, afin d'ajuster le rapport cyclique R en fonction de l'état de fonctionnement du convertisseur.

La figure 2A concerne le cas où la tension d'alimentation VCC=4,5V, et où la tension de sortie CVCC=5V. Dans ce cas, lors de la phase d'accumulation, la tension dV1 aux bornes de la self 10 vaut dV1=VCC=4,5V, et le temps de charge dt1 doit donc être très court. A l'inverse, le temps de décharge dt2 est long.

La figure 2B concerne quant à elle le cas où la tension d'alimentation VCC=1,5V, et où la tension de sortie CVCC=5V. Dans ce cas, à l'inverse du cas précédent, on a VCC<<CVCC, et le temps d'accumulation dt1 doit donc être plus long que le temps de décharge dt2.

On notera dans cette configuration que, si le rapport cyclique maximum $R = \dfrac{dt1}{dt1 + dt2}$ est limité à 50%, la tension de sortie CVCC ne peut être supérieure au double de la tension d'alimentation VCC.

La régulation du système de la figure 3 se fait grâce à la combinaison du pont de résistances constitué par R1 et R2, de la référence de tension (1.2V), de l'amplificateur différentiel 32, de l'oscillateur 31 ainsi que du PWM 30. Ces différents éléments combinés permettent en effet d'ajuster le rapport cyclique dt1 / T, où l'on rappelle que T est la période de l'oscillateur T=dt1+dt2.

Une telle régulation est atteinte lorsque dI1=dI2, ce qui permet d'assurer la stabilité du courant moyen Imoy dans la self 10. En reprenant les notations précédentes, on a alors: $\dfrac{dV1.dt1}{L} = \dfrac{dV2.dt2}{L}$, soit

$VCC * dt1 = (CVCC - VCC) * dt2$.

On en déduit donc que, lorsque la tension d'alimentation VCC diminue, il est nécessaire, pour atteindre la régulation, que le temps d'accumulation dt1 augmente et/ou que le temps de décharge dt2 diminue. A l'inverse, lorsque le niveau VCC devient trop élevé, le temps d'accumulation dt1 diminue (moins d'accumulation) et dt2 augmente (plus de temps de décharge).

Un premier inconvénient de ce convertisseur DCDC de l'art antérieur est qu'il présente une tendance naturelle à l'instabilité. Le système bouclé présenté en figure 3 est donc difficile à réaliser.

Pour résoudre ce problème d'instabilité, on a envisagé de faire volontairement osciller les niveaux de régulation entre deux niveaux V1 et V2 (entre 4,95V et 5,05V par exemple). En d'autres termes, la tension de sortie CVCC oscille entre 4,95V et 5,05V, au lieu d'être constante et égale à 5V. L'oscillation du système, même si elle n'est pas annulée, est ainsi contrôlée plutôt que d'être laissée libre et/ou erratique.

Cependant, un inconvénient de cette solution de l'art antérieur est que cette légère oscillation de la tension de sortie CVCC en diminue la précision. De plus, le courant consommé sur l'alimentation oscille et a tendance à créer du bruit, et ce, surtout si l'alimentation est une batterie avec une résistance de sortie élevée.

Un autre inconvénient de cette technique antérieure est qu'elle n'est pas compatible avec un convertisseur DCDC présentant un contrôle de courant de surcharge précis, le courant pouvant atteindre des valeurs élevées pour remonter du niveau de régulation V1 au niveau de régulation V2.

Pour illustrer plus précisément ces différents inconvénients, on considère le cas d'un convertisseur DCDC, du type de celui de la figure 3, qui délivre une tension de sortie continue CVCC=5V, et dont la tension d'alimentation VCC est susceptible de varier entre 5V et 2,5V. Par exemple, l'alimentation est réalisée par une batterie, qui délivre 5V lorsqu'elle vient d'être chargée, mais dont la tension chute à 2,5V lorsqu'elle est déchargée, après un certain temps d'utilisation.

Comme on cherche à délivrer une tension de sortie de CVCC=5V, et que le convertisseur DCDC doit pouvoir fonctionner avec une tension d'alimentation VCC=2.5V, il est nécessaire, comme indiqué précédemment, que le rapport cyclique soit au moins égal à 50%. En effet, on rappelle que la régulation est atteinte lorsque dI1=dI2, soit lorsque $VCC * dt1 = (CVCC - VCC) * dt2$, dont on déduit que $R = \dfrac{dt1}{dt1 + dt2} = 1 - \dfrac{VCC}{CVCC}$.

A l'inverse, lorsque la batterie est correctement chargée, et que VCC=4.8V, on a $R = 1 - \dfrac{4,8V}{5V} = 4\%$, donc un rapport cyclique de 5% environ serait suffisant. A cette tension VCC=4,8V, si l'amplificateur différentiel 32 détecte une tension de sortie CVCC légèrement trop faible (suite à un appel de courant sur CVCC par exemple), il va agir sur le PWM 30 pour faire augmenter le rapport cyclique $R = \dfrac{dt1}{dt1 + dt2}$ du signal H.

Le temps de réaction de la boucle d'asservissement complète de la figure 3 étant long (en raison de la présence de la self 10 dans laquelle il faut accumuler de l'énergie, avant de la restituer pour augmenter la tension de sortie CVCC), plusieurs périodes peuvent être nécessaires au rétablissement de la tension de sortie CVCC jusqu'à son niveau CVCC=5V. Le rapport cyclique R peut alors atteindre son maximum (ici de 50%) avant que la tension de sortie n'ait retrouvé son niveau de 5V.

Or, lorsque R=50%, une tension d'alimentation VCC=4.8V génère un courant très élevé dans la self 10, régi par l'équation dI1= VCC*dt1/L. L'énergie accumulée dans la self 10 devient alors très importante. Lorsque la tension de sortie CVCC finit par retrouver son niveau de consigne CVCC=5V, il est impossible de diminuer rapidement l'importante énergie accumulée dans la self 10, même en diminuant le rapport cyclique R à quelques %.

Un surdépassement, encore appelé "overshoot", risque alors de se créer, entraînant une diminution du rapport cyclique maximum.

A l'inverse, lorsque la tension de sortie CVCC redevient trop faible, aucune énergie n'est accumulée dans la self 10 (ou, à tout le moins, une énergie insuffisante), et il se produit alors à nouveau un sous-dépassement, encore appelé "undershoot".

Ces successions d'"overshoot" et d'"undershoot" sont la cause de l'instabilité du convertisseur DCDC de l'art antérieur. En outre, le contrôle de surcharge risque de se déclencher alors qu'il n'y a qu'une faible charge en sortie.

### 3. Objectifs de l'invention

L'invention a notamment pour objectif de pallier ces inconvénients de l'art antérieur, notamment en termes d'instabilité, de surcharge et de bruit.

Plus précisément, un objectif de l'invention est de fournir une technique de conversion selfique de tensions de type DCDC qui présente une stabilité accrue par rapport aux techniques de l'art antérieur.

Un autre objectif de l'invention est de proposer une telle technique qui permette de délivrer une tension de sortie de valeur précise, quelle que soit la valeur de la tension d'alimentation continue.

L'invention a encore pour objectif de fournir une telle technique qui soit simple à implémenter et peu coûteuse à mettre en oeuvre.

L'invention a également pour objectif de proposer une telle technique qui s'adapte à des changements soudains de la tension d'alimentation, sans provoquer d'"overshoot" et/ou d'"undershoot".

Un autre objectif de l'invention est de fournir une telle technique de conversion DCDC qui ne nécessite pas de mettre en oeuvre une protection contre d'éventuelles surcharges, et qui permette de contrôler automatiquement le courant au démarrage.

L'invention a également pour objectif de fournir une telle technique de conversion DCDC qui permette d'avoir des appels de courant sensiblement constants sur l'alimentation.

### 4. Exposé de l'invention

Ces objectifs, ainsi que d'autres qui apparaîtront par la suite, sont atteints à l'aide d'un dispositif de conversion d'une tension d'alimentation continue en une tension de sortie continue, qui comprend :

- au moins une self accumulant une énergie au cours d'un temps d'accumulation et restituant ladite énergie accumulée au cours d'un temps de décharge, de façon à ce que ladite tension de sortie soit de valeur supérieure ou égale à celle de ladite tension d'alimentation ;
- un oscillateur pilotant lesdits temps d'accumulation et de décharge, dont une période est égale à une somme dudit temps d'accumulation et dudit temps de décharge et dont un rapport cyclique est égal au rapport dudit temps d'accumulation et de ladite période,

Selon l'invention, ledit oscillateur comprend des moyens de contrôle de ladite période et dudit rapport cyclique en fonction de ladite tension d'alimentation et de ladite tension de sortie.

Ainsi, l'invention repose sur une approche tout à fait nouvelle et inventive de la conversion de tension de type DCDC à base de self. En effet, la technique de l'invention repose sur la création d'un oscillateur capable d'adapter, à la fois le rapport cyclique et la fréquence des oscillations, en fonction des tensions de sortie CVCC et d'alimentation VCC.

Alors que les convertisseurs DCDC selfiques de l'art antérieur comprenaient des moyens d'ajustement du seul rapport cyclique dt1/T en fonction du niveau de la tension de sortie CVCC, l'oscillateur du convertisseur de l'invention tient compte des valeurs des tensions d'alimentation VCC et de sortie CVCC pour adapter, non seulement le rapport cyclique dt1/T, mais également la fréquence 1/T, et ainsi optimiser les temps d'accumulation et de décharge de la self.

On obtient ainsi un convertisseur DCDC selfique beaucoup plus stable que selon l'art antérieur, qui permet de délivrer un signal de sortie présentant peu ou pas d'oscillations. Le bruit sur l'alimentation est par ailleurs réduit, et le courant de démarrage limité. En outre, contrairement aux convertisseurs de l'art antérieur, il n'est plus nécessaire de prévoir un système particulier de protection du convertisseur contre d'éventuelles surcharges, de telles surcharges n'apparaissant plus, grâce à une limitation automatique du fonctionnement du convertisseur, quelle que soit la tension d'alimentation.

Avantageusement, lesdits moyens de contrôle comprennent des moyens de réduction, respectivement d'augmentation, de ladite période et des moyens d'augmentation, respectivement de réduction, dudit rapport cyclique, activés lorsque ladite tension d'alimentation diminue, respectivement augmente.

En effet, lorsque la tension d'alimentation diminue, la self se charge plus lentement, car la pente d'accumulation est faible, et il est donc nécessaire d'augmenter le rapport cyclique dt1/T. De même, lorsque la tension d'alimentation est basse, la décharge de la self est rapide, et il est donc nécessaire de rafraîchir souvent la tension de sortie afin d'éviter qu'elle ne chute trop bas : on choisit donc de réduire la période T d'oscillation du convertisseur.

Préférentiellement, lesdits moyens de contrôle comprennent des premiers moyens de retard permettant de régler ledit temps d'accumulation et des seconds moyens de retard permettant de régler ledit temps de décharge.

On règle ainsi indépendamment dt1 et dt2, ce qui permet d'agir, d'une part sur la période T=dt1+dt2, et d'autre part sur le rapport cyclique dt1/T.

Selon une caractéristique avantageuse de l'invention, lesdits premiers et seconds moyens de retard comprennent chacun au moins une capacité chargeable à partir d'au moins un courant contrôlé par ladite tension d'alimentation et/ou ladite tension de sortie.

Le principe de fonctionnement du convertisseur de l'invention repose donc sur la charge de capacités à courants contrôlés. Le temps de charge des capacités introduit un délai constitutif de dt1 et/ou dt2, qui est directement lié aux courants alimentant ces capacités, et donc sensiblement proportionnel aux valeurs des tensions d'alimentation et/ou de sortie.

Selon une première caractéristique avantageuse, lesdits premiers moyens de retard comprennent au moins une première capacité chargeable à partir d'un premier courant sensiblement proportionnel à ladite tension d'alimentation, et ledit temps d'accumulation est sensiblement égal à un temps de charge de ladite première capacité.

Selon une deuxième caractéristique avantageuse, lesdits seconds moyens de retard comprennent au moins une deuxième capacité chargeable à partir d'un deuxième courant sensiblement proportionnel à une différence entre ladite tension d'alimentation et ladite tension de sortie, et ledit temps de décharge est sensiblement égal à un temps de charge de ladite deuxième capacité.

Préférentiellement, ledit oscillateur est un oscillateur en anneau.

Selon une caractéristique préférentielle de l'invention, lesdits premiers et/ou seconds moyens de retard comprennent chacun au moins deux modules élémentaires de retard en cascade comprenant chacun au moins une desdites capacités chargeables par courant contrôlé. On peut ainsi jouer plus finement sur le réglage des temps d'accumulation et de décharge dt1 et dt2.

Avantageusement, ledit oscillateur en anneau comprend également un nombre impair d'inverseurs en sortie desdits premiers et seconds moyens de retard, formant moyens de mise en forme d'un signal pilotant lesdits temps d'accumulation et de décharge de ladite self, encore appelé signal d'horloge et signal de commande, CLKDCDC dans la suite.

L'invention concerne également un circuit électronique comprenant un dispositif de conversion tel que décrit précédemment.

## 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

- la figure 1A présente un synoptique d'un convertisseur DCDC selfique de l'art antérieur, dont la figure 1B illustre plus particulièrement le fonctionnement ;
- les figures 2A et 2B, également commentées en relation avec l'art antérieur, illustrent le fonctionnement du convertisseur DCDC selfique de la figure 1A, d'une part lorsque la tension d'alimentation est élevée, et d'autre part lorsque cette tension d'alimentation est faible ;
- la figure 3 présente un schéma synoptique plus détaillé du convertisseur DCDC selfique de la figure 1A, sur lequel apparaissent les moyens de génération du signal d'horloge commandant les temps d'accumulation et de décharge de la self ;
- les figures 4A et 4B présentent un synoptique de l'oscillateur du convertisseur DCDC selfique de l'invention ;
- la figure 5 illustre plus particulièrement les deuxièmes moyens de retard DEL2 réglant le temps de décharge dt2 de la self ;
- la figure 6 illustre plus particulièrement les premiers moyens de retard DEL1 réglant le temps d'accumulation dt1 de la self ;
- la figure 7 décrit l'évolution du rapport cyclique et de la fréquence d'oscillation du convertisseur de l'invention en fonction de la tension d'alimentation ;
- la figure 8 détaille la forme du signal d'horloge CLKDCDC pour deux valeurs distinctes de la tension d'alimentation ;
- la figure 9 présente, à tension d'alimentation constante, l'évolution du rapport cyclique et de la fréquence en fonction de l'évolution de la tension de sortie.

## 6. Description d'un mode de réalisation de l'invention

Le principe général de l'invention repose sur la prise en compte des tensions d'alimentation et de sortie d'un convertisseur DCDC selfique pour régler le rapport cyclique et la fréquence des oscillations pilotant les temps d'accumulation et de décharge de la self. Dans un mode de réalisation préférentiel de l'invention, qui sera décrit plus en détail dans la suite de ce document, le convertisseur DCDC selfique met en oeuvre une charge de capacités à courants contrôlés.

Plus précisément, et comme indiqué ci-dessus en relation avec les figures 1A et 1B, on a : di1=VCC*dt1/L, et di2=(CVCC-VCC)*dt2/L.

En conséquence, lorsque la tension d'alimentation est élevée (par exemple pour VCC=4.5V lorsque la tension de sortie CVCC=5V), la pente de di1 est importante (ce qui correspond à une charge rapide de la self 10), alors que la pente de di2 est faible (ce qui correspond à une décharge lente de la self 10).

Inversement, si la tension d'alimentation est faible (par exemple VCC=1.5V), la pente de di1 est faible et celle de di2 a augmenté.

Le principe de fonctionnement du convertisseur de l'invention consiste donc à diminuer la fréquence 1/T de l'oscillateur et à diminuer le rapport cyclique maximum $R_{max}$ (où R=dt1/T) si VCC augmente car la décharge est alors lente et la charge très rapide. Au contraire, lorsque VCC diminue, on augmente la fréquence et le rapport cyclique maximum.

En effet, la décharge étant lente à 4,5V, il n'est pas nécessaire de rafraîchir la tension CVCC souvent, contrairement au cas (correspondant à celui de la figure 2B) où la tension d'alimentation VCC est faible. La période T des oscillations influence directement l'oscillation de la sortie CVCC. A 1.5V, la décharge est rapide. Il faut donc rafraîchir plus souvent CVCC, afin que cette tension de sortie CVCC ne chute pas trop bas.

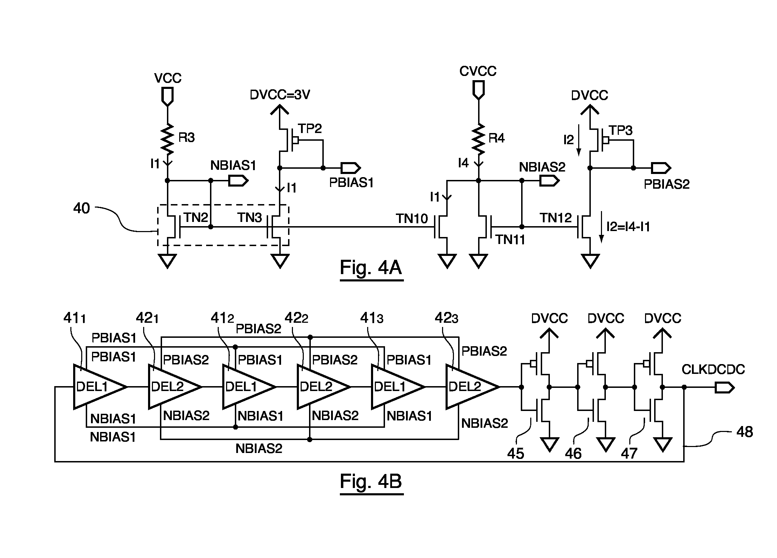

On présente, en relation avec les figures 4A et 4B, un mode de réalisation de l'oscillateur du convertisseur DCDC selfique de l'invention. Un tel oscillateur remplace l'oscillateur 31 du convertisseur de l'art antérieur illustré en figure 3, et génère un signal de commande CLKDCDC, qui alimente le PWM 30 : ce dernier délivre ensuite un signal d'horloge H qui agit directement sur les transistors TN1 et TP1 contrôlant l'accumulation et la décharge de la self 10. En d'autres termes, le convertisseur DCDC selfique de l'invention reste identique, dans son principe, à celui décrit précédemment en relation avec la figure 3, à l'exception de l'oscillateur dont le fonctionnement est détaillé ci-après.

La figure 4A présente le principe de génération des potentiels NBIAS1, PBIAS1 d'une part, et NBIAS2, PBIAS2 d'autre part, qui alimentent les éléments de retard en cascade DEL1, DEL2 illustrés en figure 4B. Le module de la figure 4A est alimenté par la tension d'alimentation VCC et par la tension de sortie du convertisseur CVCC. On crée, grâce à la résistance R3, un courant I1 sensiblement proportionnel à la tension d'alimentation VCC. Un premier miroir de courant 40, constitué des deux transistors TN2 et TN3, permet de recopier ce courant I1 dans la branche reliant le transistor TN3 au transistor TP2.

Le courant I1 est également copié, par le biais du miroir de courant constitué de TN3 et TN10, dans ce dernier transistor TN10, qui absorbe en outre une partie du courant I4 proportionnel à la tension de sortie CVCC généré dans la résistance R4.

Le courant I2 dans le transistor TN11 correspond donc à la différence des courants générés dans les résistances R4 et R3 (I2=I4-I1), et est donc proportionnel à CVCC-VCC (à la condition que R3 et R4 soient de valeurs sensiblement égales).

Le miroir de courant constitué des transistors TN11 et TN12 permet de recopier le courant I2 dans le transistor TN11, dans la branche reliant le transistor TN12 au transistor TP3.

Les transistors TP2 et TP3 sont tous deux alimentés par une tension de coeur DVCC=3V.

Le signal CLKDCDC qui commande l'état passant ou bloqué des transistors TN1 et TP1 (voir figure 1A) est généré, selon le montage de la figure 4B, à partir des potentiels NBIAS1, PBIAS1, NBIAS2, PBIAS2.

Le montage de la figure 4B comprend trois éléments de retard en cascade DEL1 permettant de générer le temps dt1 d'accumulation de la self 10, et trois éléments de retard en cascade DEL2 permettant de générer le temps dt2 de décharge de la self 10, ainsi que trois inverseurs 45, 46 et 47 permettant de mettre en forme le signal. Comme indiqué par la boucle de rétroaction 48, l'oscillateur de l'invention est un oscillateur en anneau, qui exploite les délais induits par le temps de propagation entre les quinze (nombre impair) d'inverseurs (à savoir les trois inverseurs 45, 46 et 47 et les douze inverseurs contenus deux à deux dans chacun des éléments de retard DEL1 et DEL2) pour réaliser la mise en forme du signal CLKDCDC.

Les éléments de retard DEL1 sont alimentés par le courant I1 proportionnel à la tension d'alimentation VCC. Lorsque VCC augmente, le courant I1 dans R3 augmente, ce qui permet de charger les capacités C1 et C2 de l'élément de retard DEL1 plus rapidement, et ainsi de réduire le temps d'accumulation dt1 en fonction de la tension d'alimentation VCC.

Les éléments de retard DEL2 sont quant à eux alimentés par le courant I2, proportionnel à la différence des tensions de sortie et d'alimentation CVCC-VCC. Lorsque VCC augmente, à CVCC constante, le courant I2 dans R4 diminue, et les capacités C3 et C4 de l'élément de retard DEL2 se charge alors plus lentement, ce qui augmente le temps de décharge dt2 dans la self 10.

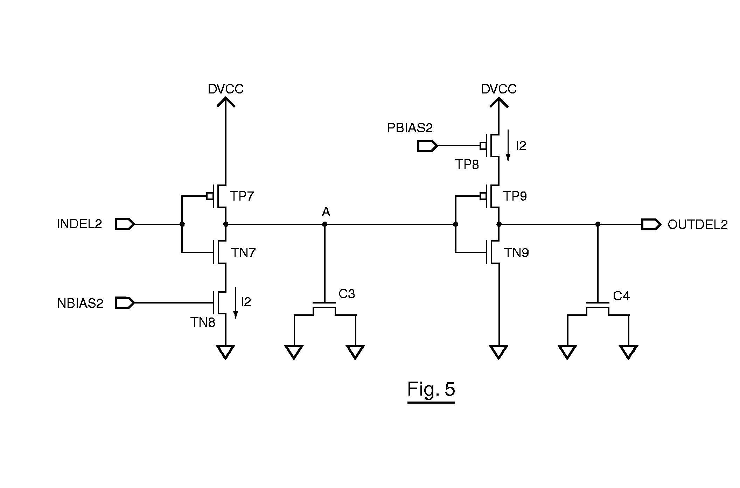

La figure 5 illustre plus particulièrement la structure de l'élément de retard DEL2 permettant de générer le temps dt2 de décharge de la self 10.

Les transistors TN11 (figure 4A) et TN8 (figure 5) forment un miroir de courant permettant de recopier le courant I2 dans la branche de DEL2 reliant les transistors TN8 et TN7. De même, les transistors TP3 (figure 4A) et TP8 (figure 5) forment un miroir de courant permettant de recopier le courant I2 dans la branche de DEL2 reliant les transistors TP8 et TP9.

En outre, l'ensemble constitué des transistors TN7 et TP7 d'une part, et des transistors TP9 et TN9 d'autre part, forment deux inverseurs.

Lorsque le potentiel INDEL2 passe d'un niveau logique bas (soit 0) à un niveau logique haut (soit 1, ou plus précisément INDEL2=DVCC=3V), le transistor TP7 devient bloqué, et le transistor TN7 devient passant. Le transistor TN8 tire le courant I2 de la capacité C3 préalablement chargée. Le potentiel au point A décroît donc linéairement avec le temps, selon un coefficient proportionnel au courant I2, jusqu'à atteindre une valeur nulle.

Lorsque le potentiel au point A passe à zéro, le transistor TN9 devient bloqué, et le transistor TP9 devient passant. Le courant 12 dans TP8 charge alors la capacité C4 (préalablement déchargée), linéairement avec le temps, selon un coefficient de proportionnalité 12. La sortie OUTDEL2 de l'élément de retard DEL2 passe donc progressivement d'un niveau logique bas (soit 0) à un niveau logique haut (soit 1, ou encore OUTDEL2=DVCC=3V).

En conséquence, lorsque le potentiel INDEL2 passe de 0 à 3V, la sortie OUTDEL2 de l'élément de retard DEL2 passe également de 0 à 3V, mais avec un retard de $\tau_3+\tau_4$, où $\tau_3$ est le temps de décharge de la capacité C3 et où $\tau_4$ est le temps de charge de la capacité C4, $\tau_3$ et $\tau_4$ étant tous deux proportionnels au courant 12, et donc à différence des tensions de sortie et d'alimentation CVCC-VCC.

Inversement, lorsque le potentiel INDEL2 passe d'un niveau logique haut (INDEL2=DVCC=3V) à un niveau logique bas (INDEL2=0), le transistor TN7 devient bloqué et le transistor TP7 devient passant, ce qui entraîne une charge rapide (de durée négligeable) de la capacité C3, à partir de la tension de coeur DVCC=3V. Le potentiel au point A passe donc instantanément de 0 à 3V. Le transistor TP9 devient alors bloqué, et le transistor TN9 devient passant, ce qui entraîne une décharge rapide (de durée négligeable) de la capacité C4 au travers de TN9. Le potentiel OUTEDL2 en sortie de l'élément de retard DEL2 passe donc instantanément d'un niveau logique haut à un niveau logique bas, soit de 3V à 0.

En conséquence, lorsque le potentiel INDEL2 passe de 3V à 0, la sortie OUTDEL2 de l'élément de retard DEL2 passe également de 3V à 0, de façon quasi-instantanée, sans induire de retard conséquent.

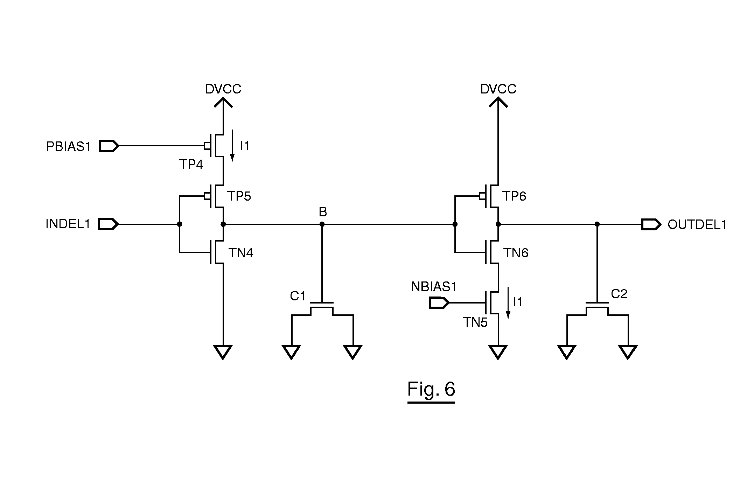

La figure 6 illustre plus particulièrement la structure de l'élément de retard DEL1 permettant de générer le temps dt1 d'accumulation dans la self 10.

Les transistors TP2 (figure 4A) et TP4 (figure 6) forment un miroir de courant permettant de recopier le courant I1 dans la branche de DEL1 reliant les transistors TP4 et TP5. De même, les transistors TN2 (figure 4A) et TN5 (figure 6) forment un miroir de courant permettant de recopier le courant I1 dans la branche de DEL1 reliant les transistors TN5 et TN6.

En outre, l'ensemble constitué des transistors TN4 et TP5 d'une part, et des transistors TP6 et TN6 d'autre part, forment deux inverseurs.

Lorsque le potentiel INDEL1 passe d'un niveau logique haut (soit 1, ou plus précisément INDEL1=DVCC=3V) à un niveau logique bas (soit 0), le transistor TN4 devient bloqué, et le transistor TP5 devient passant. Le courant I1 charge donc la capacité C1 selon une loi de charge linéaire avec le temps proportionnelle à I1, jusqu'à ce que le potentiel au point B atteigne DVCC=3V.

Quand cette valeur est atteinte, le transistor TP6 devient bloqué et le transistor TN6 devient passant.

Le transistor TN5 tire donc un courant I1 de la capacité C2, préalablement chargée, qui se décharge donc vers la masse, linéairement avec le temps, selon un coefficient de proportionnalité égal au courant I1. Lorsque la capacité C2 est déchargée, le potentiel OUTDEL1 en sortie de l'élément de retard DEL1 passe alors à 0.

En conséquence, lorsque le potentiel INDEL1 passe de 3V à 0V, la sortie OUTDEL1 de l'élément de retard DEL1 passe également de 3V à 0V, mais avec un retard de $\tau_1+\tau_2$, où $\tau_1$ est le temps de charge de la capacité C1 et où $\tau_2$ est le temps de décharge de la capacité C2, $\tau_1$ et $\tau_2$ étant tous deux proportionnels au courant I1, et donc à la tension d'alimentation VCC.

Inversement, lorsque le potentiel INDEL1 passe d'un niveau logique bas (INDEL1=0) à un niveau logique haut (INDEL1=DVCC=3V), le transistor TP5 devient bloqué, et le transistor TN4 devient passant. La capacité C1, préalablement chargée, se décharge donc très rapidement via le transistor TN4, de sorte que le potentiel au point B passe quasi-instantanément de 3V à 0.

Quand cette valeur est atteinte, le transistor TN6 se bloque, et le transistor TP6 devient passant. La capacité C2 se charge donc très rapidement, via le transistor TP6, à partir de la tension de coeur DVCC=3V. Le potentiel OUTDEL1 passe donc très rapidement de 0 à 3V.

En conséquence, lorsque le potentiel INDEL1 passe de 0 à 3V, le potentiel OUTDEL1 en sortie de l'élément de retard DEL1 passe également de 0 à 3V, de façon quasi-instantanée, sans retard significatif.

En revenant à la figure 4B, on déduit de ce qui précède le principe de fonctionnement de l'oscillateur en anneau de l'invention.

Lorsque le potentiel en entrée du premier élément de retard DEL1 $41_1$ passe de 0 à 3V, on a :

- la sortie du premier élément de retard DEL1 $41_1$, qui est l'entrée du premier élément de retard DEL2 $42_1$, passe immédiatement de 0 à 3V ;
- la sortie du premier élément de retard DEL2 $42_1$, qui est l'entrée du deuxième élément de retard DEL1 $41_2$, passe de 0 à 3V au bout d'un temps $\tau_3+\tau_4$ proportionnel à CVCC-VCC ;
- la sortie du deuxième élément de retard DEL1 $41_2$, qui est l'entrée du deuxième élément de retard DEL2 $42_2$, passe immédiatement de 0 à 3V ;
- la sortie du deuxième élément de retard DEL2 $42_2$, qui est l'entrée du troisième élément de retard DEL1 $41_3$, passe de 0 à 3V au bout d'un temps $\tau_3+\tau_4$ proportionnel à CVCC-VCC ;
- la sortie du troisième élément de retard DEL1 $41_3$, qui est l'entrée du troisième élément de retard DEL2 $42_3$, passe immédiatement de 0 à 3V ;
- la sortie du troisième élément de retard DEL2 $42_3$ passe de 0 à 3V au bout d'un temps $\tau_3+\tau_4$ proportionnel à CVCC-VCC.

Le signal traverse ensuite rapidement les trois inverseurs 45, 46 et 47, qui le remettent en forme et l'inversent successivement. En conséquence, quand le potentiel en entrée du premier élément de retard DEL1 $41_1$ passe de 0 à 3V, le signal CLKDCDC présente un front descendant de 3V à 0 au bout de $3*(\tau_3+\tau_4)$=dt2, temps de décharge de la self 10. On notera qu'on a supposé ici, par souci de simplification, que tous les éléments de retard DEL2 référencés $42_1$ à $42_3$ étaient identiques et présentaient donc les mêmes constantes de temps $\tau_3$ et $\tau_4$. Ceci ne constitue cependant pas une limitation de l'invention.

Par le biais de la boucle de retour 48, le passage de CLKDCDC de 3V à 0 induit le passage du potentiel en entrée du premier élément de retard DEL1 $41_1$ de 3V à 0, ce qui induit les modifications suivantes :

- la sortie du premier élément de retard DEL1 $41_1$, qui est l'entrée du premier élément de retard DEL2 $42_1$, passe de 3V à 0 au bout d'un temps $\tau_1+\tau_2$ proportionnel à la tension d'alimentation VCC ;
- la sortie du premier élément de retard DEL2 $42_1$, qui est l'entrée du deuxième élément de retard DEL1 412, passe immédiatement de 3V à 0 ;
- la sortie du deuxième élément de retard DEL1 $41_2$, qui est l'entrée du deuxième élément de retard DEL2 $42_2$, passe de 3V à 0 au bout d'un temps $\tau_1+\tau_2$ proportionnel à la tension d'alimentation VCC ;
- la sortie du deuxième élément de retard DEL2 $42_2$, qui est l'entrée du troisième élément de retard DEL1 $41_3$, passe immédiatement de 3V à 0 ;
- la sortie du troisième élément de retard DEL1 $41_3$, qui est l'entrée du troisième élément de retard DEL2 $42_3$, passe de 3V à 0 au bout d'un temps $\tau_1+\tau_2$ proportionnel à la tension d'alimentation VCC ;
- la sortie du troisième élément de retard DEL2 $42_3$ passe immédiatement de 3V à 0.

Le signal traverse ensuite rapidement les trois inverseurs 45, 46 et 47, qui le remettent en forme et l'inversent successivement. En conséquence, quand le potentiel en entrée du premier élément de retard DEL1 $41_1$ passe de 3V à 0, le signal CLKDCDC présente un front montant de 0 à 3V au bout de $3*(\tau_1+\tau_2)$=dt1, temps d'accumulation dans la self 10. A nouveau, on notera qu'on a supposé ici, par souci de simplification, que tous les éléments de retard DEL1 référencés $41_1$ à $41_3$ étaient identiques et présentaient donc les mêmes constantes de temps $\tau_1$ et $\tau_2$. Comme précédemment, ceci ne restreint pas la portée de l'invention.

Le signal CLKDCDC délivré en sortie de l'oscillateur en anneau de la figure 4B présente donc :

- un niveau logique haut (CLKDCDC=DVCC=3V) pendant un temps dt1=$3*(\tau_1+\tau_2)$, proportionnel à la tension d'alimentation VCC ;
- un niveau logique bas (CLKDCDC=0) pendant un temps dt2=$3*(\tau_3+\tau_4)$, proportionnel à la différences des tensions de sortie et d'alimentation CVCC-VCC.

De cette façon, on contrôle donc bien, et la fréquence, et le rapport cyclique du signal CLKDCDC, en fonction des tensions d'alimentation VCC et de sortie CVCC.

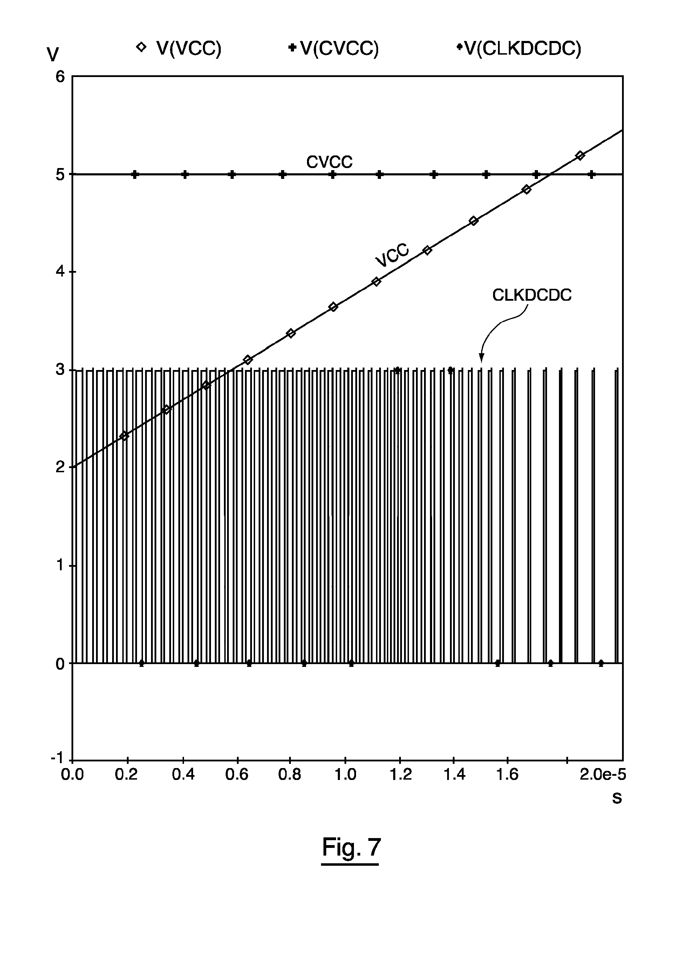

La figure 7 présente plus particulièrement l'évolution du signal CLKDCDC généré en sortie de l'oscillateur en anneau de la figure 4B pour une tension de sortie CVCC=5V, lorsque la tension d'alimentation VCC varie de 2V à 5,5V. Comme illustré sur cette figure 7, le temps d'accumulation dt1 (c'est-à-dire le temps pendant lequel le signal CLKDCDC est à son niveau haut) diminue quand la tension d'alimentation VCC augmente. Parallèlement, la période T du signal CLKDCDC augmente également quand la tension d'alimentation VCC augmente.

Le rapport cyclique R=dt1/T de l'oscillateur de l'invention diminue donc quand la tension d'alimentation VCC augmente.

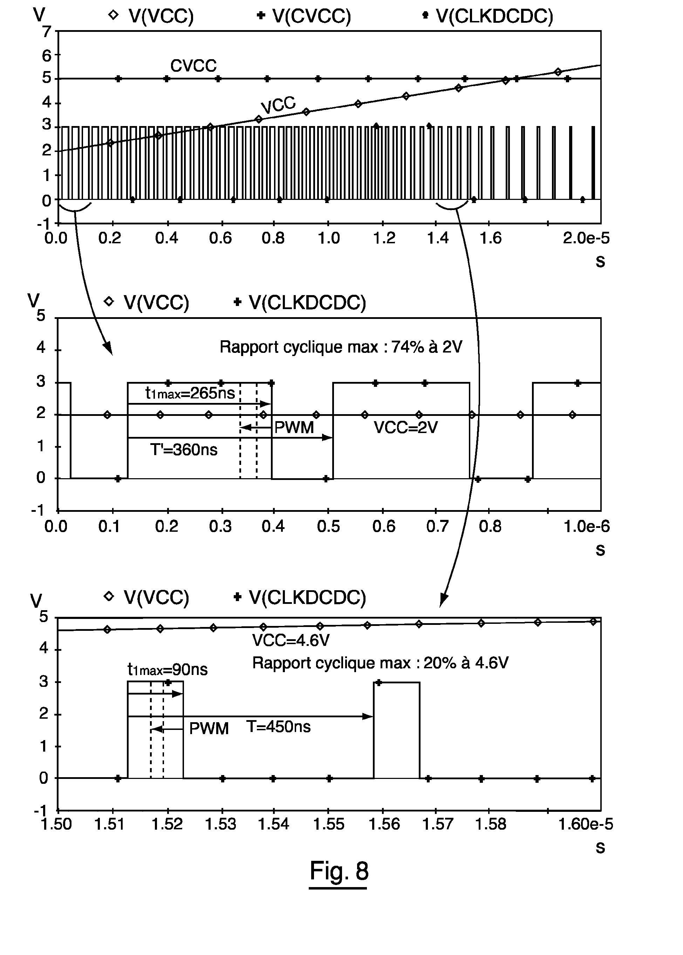

La figure 8 illustre plus précisément le principe général de la figure 7, et comprend trois diagrammes, à savoir :

- le diagramme supérieur est identique à celui de la figure 7 et illustre l'évolution du signal CLKDCDC pour une tension de sortie CVCC=5V et une tension d'alimentation VCC variant de 2V à 5,5V ;
- le diagramme médian constitue un zoom grossissant du diagramme supérieur qui illustre plus précisément la forme du signal CLKDCDC lorsque la tension d'alimentation VCC vaut environ 2V ;
- le diagramme inférieur constitue un zoom grossissant du diagramme supérieur, qui illustre plus précisément la forme du signal CLKDCDC lorsque la tension d'alimentation VCC vaut environ 4,6V.

A VCC=2V (diagramme médian), la période des oscillations est T'=360ns, et le PWM 30 peut faire varier légèrement le temps d'accumulation dt1 dans la self 10 (comme illustré par la flèche PWM) jusqu'à une valeur maximale $t1_{max}$=265ns. On atteint alors un rapport cyclique maximum $*R_{max}=t1_{max}/T'$ d'environ 74%.

A VCC=4,6V (diagramme inférieur), la période des oscillations est T=450ns, et le PWM 30 peut faire varier légèrement le temps d'accumulation dt1 dans la self 10 (comme illustré par la flèche PWM) jusqu'à une valeur maximale $t1_{max}$=90ns. On atteint alors un rapport cyclique maximum $R_{max}=t1_{max}/T'$ d'environ 20%.

Selon une caractéristique astucieuse de l'invention, on maintient une marge de 5% sur le rapport cyclique maximum théorique nécessaire au bon fonctionnement du convertisseur. De cette façon, le rapport cyclique du signal d'horloge H est contrôlé et régulé précisément par l'ensemble constitué de l'amplificateur différentiel 32 et du PWM 30, ce qui permet d'obtenir une tension de sortie CVCC précise. En d'autres termes, l'oscillateur en anneau de l'invention réalise un réglage grossier de la période et du rapport cyclique des oscillations, que le PWM 30 permet ensuite d'affiner, en fonction des variations de la tension de sortie CVCC répercutées par l'amplificateur différentiel 32.

Ainsi, l'augmentation de ce rapport cyclique lors d'un appel de courant ne peut-être que de 5% supérieure au rapport d'équilibre défini par di1=di2. Ceci permet d'obtenir un système de régulation stable.

De plus, cette mesure permet, par rapport aux convertisseurs de l'art antérieur, de réduire la tension d'alimentation minimale de fonctionnement : en effet, le rapport cyclique R peut augmenter au-delà de 50% (limitation obligatoire de l'art antérieur, comme décrit ci-dessus), pour atteindre par exemple des valeurs de l'ordre de 80% si VCC=1,5V, sans que cela ne génère pour autant une instabilité à VCC=4,8V.

En outre, dans le cas où la tension de sortie CVCC est programmable (par exemple pour prendre l'une quelconque des valeurs 5V, 3V et 2V) grâce à des ponts diviseurs R1 et R2 différents, l'oscillateur s'adapte automatiquement. Cela permet aussi lors de la charge initiale de la capacité de sortie (c'est-à-dire au démarrage) de limiter le courant de charge et d'éviter un appel de courant trop important (cas où le rapport cyclique maximum $R_{max}$=80%). Dans ce cas de démarrage du convertisseur DCDC, le rapport cyclique maximum $R_{max}$ augmente progressivement à partir de quelques % jusqu'à 80% ou plus si nécessaire.

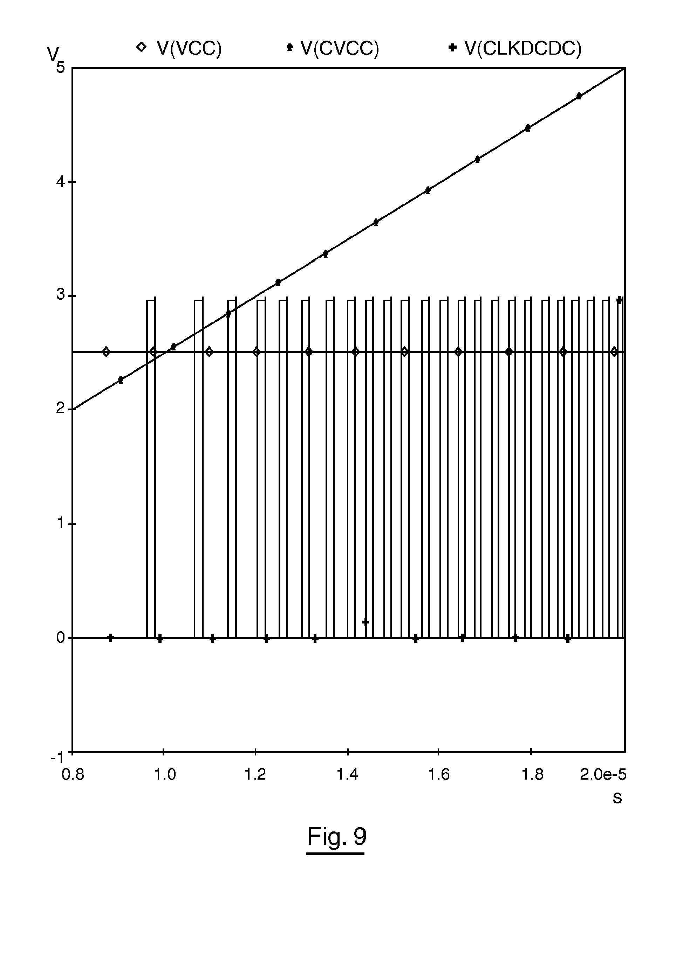

La figure 9 illustre plus particulièrement la variation de CVCC de 2V à 5V pour une tension d'alimentation VCC de 2.5V. On voit le rapport cyclique augmenter et la fréquence diminuer au fur et à mesure que l'écart entre CVCC et VCC augmente. Ainsi, l'appel de courant au démarrage est contrôlé naturellement. On rappelle qu'à l'inverse, un système classique de l'art antérieur générerait un rapport cyclique maximum $R_{max}$ de 80% environ tant que CVCC<5V, et donc un courant très important lorsque CVCC=2.6V par exemple. On aurait donc un courant d'accumulation dI1 élevé, alors que le courant de décharge dI2 serait sensiblement nul (car CVCC-VCC serait sensiblement nul également) : le courant moyen dans la self 10, Imoy augmenterait donc sans cesse et pourrait atteindre plusieurs Ampères rapidement, entraînant ainsi la destruction du composant.

Selon l'art antérieur, un système complexe et coûteux en surface de silicium permet en général de contrôler ce courant de démarrage. Avec l'oscillateur de l'invention, ce contrôle supplémentaire du courant de démarrage n'est plus nécessaire.

De même, le courant maximum étant automatiquement limité, le convertisseur DCDC de l'invention permet de s'affranchir de tout système de contrôle des surcharges.

**Revendications**

**1.** Dispositif de conversion d'une tension d'alimentation continue en une tension de sortie continue, ledit dispositif de conversion comprenant :

- au moins une self accumulant une énergie au cours d'un temps d'accumulation et restituant ladite énergie accumulée au cours d'un temps de décharge, de façon à ce que ladite tension de sortie soit de valeur supérieure ou égale à celle de ladite tension d'alimentation ;
- un oscillateur pilotant lesdits temps d'accumulation et de décharge, dont une période est égale à une somme dudit temps d'accumulation et dudit temps de décharge et dont un rapport cyclique est égal au rapport dudit temps d'accumulation et de ladite période,

**caractérisé en ce que** ledit oscillateur comprend des moyens de contrôle de ladite période et dudit rapport cyclique en fonction de ladite tension d'alimentation et de ladite tension de sortie.

**2.** Dispositif de conversion selon la revendication 1, **caractérisé en ce que** lesdits moyens de contrôle comprennent des moyens de réduction, respectivement d'augmentation, de ladite période et des moyens d'augmentation, respectivement de réduction, dudit rapport cyclique, activés lorsque ladite tension d'alimentation diminue, respectivement augmente.

**3.** Dispositif de conversion selon l'une quelconque des revendications 1 et 2, **caractérisé en ce que** lesdits moyens de contrôle comprennent des premiers moyens de retard permettant de régler ledit temps d'accumulation et des seconds moyens de retard permettant de régler ledit temps de décharge.

**4.** Dispositif de conversion selon la revendication 3, **caractérisé en ce que** lesdits premiers et seconds moyens de retard comprennent chacun au moins une capacité chargeable à partir d'au moins un courant contrôlé par ladite tension d'alimentation et/ou ladite tension de sortie.

**5.** Dispositif de conversion selon les revendications 3 et 4, **caractérisé en ce que** lesdits premiers moyens de retard comprennent au moins une première capacité chargeable à partir d'un premier courant sensiblement proportionnel à ladite tension d'alimentation, et **en ce que** ledit temps d'accumulation est sensiblement égal à un temps de charge de ladite première capacité.

**6.** Dispositif de conversion selon l'une quelconque des revendications 3 à 5, **caractérisé en ce que** lesdits seconds moyens de retard comprennent au moins une deuxième capacité chargeable à partir d'un deuxième courant sensiblement proportionnel à une différence entre ladite tension d'alimentation et ladite tension de sortie, et **en ce que** ledit temps de décharge est sensiblement égal à un temps de charge de ladite deuxième capacité.

7. Dispositif de conversion selon l'une quelconque des revendications 1 à 6, **caractérisé en ce que** ledit oscillateur est un oscillateur en anneau.

8. Dispositif de conversion selon l'une quelconque des revendications 4 à 7, **caractérisé en ce que** lesdits premiers et/ou seconds moyens de retard comprennent chacun au moins deux modules élémentaires de retard en cascade comprenant chacun au moins une desdites capacités chargeables par courant contrôlé.

9. Dispositif de conversion selon l'une quelconque des revendications 7 et 8, **caractérisé en ce que** ledit oscillateur en anneau comprend également un nombre impair d'inverseurs en sortie desdits premiers et seconds moyens de retard, formant moyens de mise en forme d'un signal pilotant lesdits temps d'accumulation et de décharge de ladite self.

10. Circuit électronique **caractérisé en ce qu'**il comprend un dispositif de conversion selon l'une quelconque des revendications 1 à 8.

VCC

L=10µH

10

dV

dI2

LI

CVCC

dI1

TP1

H

TN1

11

C

## Fig. 1A

T

I

Accumulation Décharge

Imoy

dI1=dV1.dt1/L

dI2=dV2.dt2/L

H

dt2

dt1

dv2=CVCC-VCC

## Fig. 1B

dv1=VCC

Accumulation

I

Imoy

$dI1=dV1.dt1/L$

T

Décharge

$dI2=dV2.dt2/L$

H

Régulation PWM

20

dt1

dt2

$dv1=4,5V$

$dv2=CVCC-VCC=0,5V$

Fig. 2A

I

Imoy

T'

$dI1=dV1.dt1/L$

$dI2=dV2.dt2/L$

H

20

Régulation PWM

dt1

dt2

$dv1=1,5V$

$dv2=CVCC-VCC=3,5V$

Fig. 2B

EP 1 746 711 A2

Fig. 3

Fig. 4A

Fig. 4B

EP 1 746 711 A2

Fig. 5

EP 1 746 711 A2

PBIAS1

DVCC

TP4

I1

TP5

INDEL1

B

TN4

C1

DVCC

TP6

TN6

OUTDEL1

NBIAS1

TN5

I1

C2

Fig. 6

Fig. 7

Fig. 8

Fig. 9